Europäisches Patentamt

European Patent Office

Office européen des brevets

(11) Veröffentlichungsnummer: **0 262 525 B1**

(12) **EUROPÄISCHE PATENTSCHRIFT**

(45) Veröffentlichungstag der Patentschrift: **13.03.91**

(51) Int. Cl.5: **D06H 3/12**, G01B 11/26

(21) Anmeldenummer: **87113637.0**

(22) Anmeldetag: **17.09.87**

(54) **Verfahren und Vorrichtung zur Messung der Schussfaden- oder Maschenreihenlage bei Textilien.**

(30) Priorität: **01.10.86 DE 3633439**

(43) Veröffentlichungstag der Anmeldung:
**06.04.88 Patentblatt 88/14**

(45) Bekanntmachung des Hinweises auf die
Patenterteilung:
**13.03.91 Patentblatt 91/11**

(84) Benannte Vertragsstaaten:
**BE CH DE ES FR GB IT LI NL**

(56) Entgegenhaltungen:
**DE-B- 1 109 636**
**DE-B- 1 635 266**
**GB-A- 2 081 894**

(73) Patentinhaber: **Mahlo GmbH & Co. KG**
**Donaustrasse 12**
**W-8424 Saal/Donau(DE)**

(72) Erfinder: **Beckstein, Hellmut, Dr.-Ing.**
**Bgm.-Heinrichstrasse 7**
**W-8403 Bad Abbach(DE)**
Erfinder: **Wild, Siegfried**
**Kornweg 25b**
**W-8400 Regensburg(DE)**

(74) Vertreter: **MEISSNER, BOLTE & PARTNER**
**Widenmayerstrasse 48 Postfach 860624**
**W-8000 München 86(DE)**

## Beschreibung

Die Erfindung betrifft ein Verfahren nach dem Oberbegriff des Anspruches 1 sowie eine Vorrichtung zur Durchführung des Verfahrens nach dem Oberbegriff des Anspruches 9.

Bei der Herstellung von Geweben kreuzen sich Kett- und Schußfäden genau rechtwinkelig. Während verschiedener späterer Arbeitsgänge in der Ausrüstung können die Gewebe aber wieder verzogen werden. Bei der Herstellung von Maschenware auf Rundstrickmaschinen schneidet man den entstehenden Schlauch auf, so daß die Maschenware nach dem Aufschneiden generell schräg verzogen ist. In beiden Fällen muß der Verzug durch entsprechende Richtmaschinen beseitigt werden, wobei diese Richtmaschinen den Verzugswinkel als Steuergröße benötigen. Es gilt also den Verzugswinkel zu messen.

Zur Messung des Verzugswinkels ist eine Vorrichtung bekannt, bei der eine Lichtquelle die laufenden Textilbahnen durchstrahlt. Gegenüber der Lichtquelle sind zwei Fotozellen mit davor liegenden Spaltblenden angeordnet, wobei die Mittelachsen der Spalte winkelig zueinander stehen. Aus dem Differenzsignal der Fotozellen ist ein Maß für den Winkelverlauf des Schußfadens herleitbar. Nachteilig ist bei dieser Anordnung die Verwendung zweier optisch-elektrischer Systeme wegen der damit verbundenen Abgleichprobleme und der geringe "Fangbereich", der durch den Winkel zwischen den beiden Spaltblenden bestimmt ist.

In der DE-PS 16 35 266 ist eine Vorrichtung beschrieben, bei der ein einziger Spalt mit dahinter angeordnetem Fotosensor von einem elektrodynamischen Antriebssystem um einen Winkel hin- und hergedreht wird, wobei die Drehbewegung in der Nähe der mechanischen Resonanzfrequenz des Systems um einen Mittelwinkel erfolgt. Die Drehbewegung ist also in ihrer Geschwindigkeit durch das System vorgegeben. Das Ausgangssignal des Fotosensors wird über einen Verstärker aufsummiert, wobei das Vorzeichen der Verstärkung immer bei Überschreiten des Mittelwinkels umgekehrt wird. Das über eine Periode aufsummierte Signal wird also dann zu Null, wenn die Meßwerte um den Mittelwinkel herum symmetrisch verteilt sind. Dies ist dann der Fall, wenn der Schußfaden die selbe Richtung hat wie der Mittelwinkel. Weiterhin ist bei dem bekannten System eine Nachlaufsteuerung vorgesehen, die das Gesamtsystem bzw. den Mittelwinkel entsprechend dem momentanen Meßwert derart verstellt, daß der Mittelwinkel immer zum Schußfaden parallel läuft. Durch eine Messung des Mittelwinkels ist also eine direkte Messung des Schußfadenverlaufes bzw. des Verzugswinkels möglich.

Dieses bekannte System ist insofern nachteilig, als durch die (mechanisch vorgegebene) Oszillationsfrequenz eine Abstimmung der Messung auf die Warengeschwindigkeit bzw. auf die Anzahl von Schußfäden pro Zeiteinheit nicht möglich ist. Bei hohen Warengeschwindigkeiten bzw. wenn viele Schußfäden pro Zeiteinheit an der Vorrichtung vorbeigeführt werden, ist die Meßgeschwindigkeit von der Oszillationsfrequenz begrenzt. Bei niedrigen Warengeschwindigkeiten und/oder sehr dicken Schußfäden (z.B. Teppiche oder dergleichen), ist die Oszillationsfrequenz viel zu hoch, so daß keine korrekte Messung des Verzugswinkels mehr erhältlich ist. Weiterhin ist durch die Art der Auswertung der Meßergebnisse (Umschalten bem Mittelwinkel ) die Gefahr gegeben, daß bei bestimmten Warenarten auftretende "Nebenmaxima", die in den Fangbereich gelangen, verfolgt werden und nicht der Verlauf des Schußfadens, sondern ein durch die Webart vorgegebenes schräg dazu verlaufendes Muster mit der Nachlaufsteuerung verfolgt wird.

Aus der DE- PS 11 09 636 ist eine ähnliche Vorrichtung bekannt, bei der jedoch der linienförmige Bereich nicht um einen Mittelwinkel hin und her oszilliert, sondern rotiert.

Bei dieser Vorrichtung ist zwar eine bessere Anpassung der Geschwindigkeit der Winkelvariation an die Warengeschwindigkeit möglich, jedoch geht der größte Anteil an Information verloren, da der Schlitz sich nur über einen Bruchteil des Gesamtkreises hinweg in dem interessierenden Winkelbereich bewegt.

Ausgehend vom oben genannten Stand der Technik ist es Aufgabe der vorliegenden Erfindung, ein Verfahren und eine Vorrichtung der eingangs genannten Art dahingehend weiterzublden, daß eine optimale Anpassung an die Warengeschwindigkeit und Warenart zur einwandfreien Detektion bzw. Messung des Verzugswinkels möglich ist.

Diese Aufgabe wird dadurch gelöst, daß man die Drehbewegung des linienförmigen Bereiches bzw. die Messung der Reflexions-oder Transmissionswerte in diskreten Winkelstufen vornimmt und den Verzugswinkel durch einen Vergleich der gewichteten Meßwerte bestimmt. Es wird also die kontinuierliche Bewegung (oszillierend oder rotatorisch) durch eine schrittförmige Bewegung ersetzt. Überraschenderweise hat es sich nämlich gezeigt, daß ganz wenige, diskrete Meßwerte zur exakten Bestimmung des Schußfadenverlaufes ausreichen. Dieses ist besonders deshalb überraschend, weil bisher davon ausgegangen wurde, man müsse einen kontinuierlichen Signalverlauf mit relativ hoher Bandbreite, also einen sehr hohen Informationsfluß auswerten, um den Verzugswinkel exakt bestimmen zu können.

Vorzugsweise nimmt man die Messung für sehr wenige Winkelstufen vor, wählt aber die Winkelbreite des linienförmigen Bereiches relativ zum Abstand der Winkelstufen 20 schmal. Auf diese Weise kann der Verlauf auch dünner Fäden exakt festgestellt werden, ohne die Winkelauflösung zu vermindern.

Die zeitliche Abfolge der Winkelstufen wählt man vorteilhafterweise in Abhängigkeit von der Warengeschwindigkeit und der Warenbeschaffenheit (Fadenzahl), so daß man die anfallende Information immer gleichartig auswerten kann. Zu jeder Winkelbestimmung wird dann also die selbe Anzahl von Meßwerten herangezogen.

Bei einer ersten bevorzugten Ausführungsform des erfindungsgemäßen Verfahrens wird der Verzugswinkel anhand der Winkellage von Maxima und/oder Minima der Meßwerte bestimmt. Diese Maxima oder Minima können sowohl aus dem Verlauf dees Schußfadens, als auch aus anderen, durch die Webart vorgegebenen Mustern herrühren, wobei diese wieder mit der Lage des Schußfadens korreliert sind. Bei einer anderen bevorzugten Ausführungsform des erfindungsgemäßen Verfahrens wird der Verzugswinkel durch Bestimmung von Symmetrieeigenschaften der Meßwerte bezüglich eines Mittelwinkels bestimmt, also anhand der Lage von mehreren Maxima oder Minima, die wiederum mit der Lage des Schußfadens und/oder einem bestimmten Musterverlauf entsprechend der Webart korreliert sind.

In beiden Fällen ist es von Vorteil, wenn man zur Bestimmung der Lage von Maxima und/oder Minima zwischen den Meßwerten unter Zugrundelegung einer bekannten mathematischen Funktion interpoliert. Diese mathematische Funktion kann eine Gerade (lineare Interpolation) oder auch eine Hyperbel oder Parabel sein, was sich in erster Linie an der Webart orientiert. Durch die Interpolation ist eine weitere Steigerung der Meßgenauigkeit trotz weniger Meßpunkte bzw. Winkelstufen möglich.

Man kann die dem momentanen Verzugswinkel nächstliegende Stufe als Mittelwinkel bestimmen, um den die Kipp- oder Drehbewegung (in diskreten Winkelstufen) erfolgt. Bei einer anderen bevorzugten Ausführungsform der Erfindung wählt man eine zwischen zwei Extremwerten (Maximum oder Minimum) liegende Stufe als Mittelwinkel, so daß dieser Mittelwinkel in einem definierten, von der Webart abhängigen Winkel zum Schußfaden verläuft.

Die erfindungsgemäße Vorrichtung zeichnet sich dadurch aus, daß die Verstellmittel derart ausgebildet sind, daß der linienförmige Bereich in diskreten, äquidistanten Winkelstufen gekippt oder gedreht wird, daß eine Gruppe von Speichern zum Speichern der Meßwerte entsprechend mindestens einiger Winkelstufen vorgesehen ist, und daß eine Recheneinheit vorgesehen, mit der Gruppe von Speichern verbunden und derart ausgebildet ist, daß die Speicherinhalte miteinander in Beziehung gesetzt (verglichen) werden und aus dem Vergleichsergebnis der Verzugswinkel errechnet wird. Die Recheneinheit kann hierbei gesondert konzipiert sein, es ist aber selbstverständlich auch möglich, hier einen Microprozessor bzw. einen Minicomputer entsprechend dem eingangs beschriebenen Verfahren zu programmieren.

Als Verstellmittel kann man einen Schrittmotor verwenden, der eine an sich bekannte Detektoranordnung, bestehend aus Zylinderlinse, Spaltblende und Fotoelement in Schritten hin und her dreht. Es ist aber auch möglich, anstatt einer mechanischen Drehung eine "virtuelle Drehung" durch eine entsprechende Zeitverzögerung der an einzelnen Punkten des linienförmigen Bereiches gemessenen Lichtwerte vorzunehmen, so daß der Sensor als feststehende Sensorzeile (CCD-Kamera) ausgebildet sein kann.

Weitere bevorzugte Ausführungsformen der Erfindung ergeben sich aus den Unteransprüchen und den nachfolgenden Ausführungsbeispielen, die anhand von Abbildungen näher beschrieben sind. Hierbei zeigen:

| | |
|---|---|
| Fig. 1 | eine schematisierte Darstellung einer ersten bevorzugten Ausführungsform der erfindungsgemäßen Vorrichtung; |
| Fig. 2 bis 4 | Warenmuster; |
| Fig. 5 | eine schematisierte Darstellung zur Erläuterung der Winkelstufen; |
| Fig. 6 bis 8 | Signalverläufe in Abhängigkeit vom Winkel des linienförmigen Bereiches zur Ware; |
| Fig. 9 | eine schematische Darstellung zur Erläuterung einer weiteren bevorzugten Ausführungsform der Erfindung, die in |
| Fig. 10 | im schematischen Blockschaltbild gezeigt ist und |
| Fig. 11 | eine bevorzugte Variante der Ausführungsform nach Fig. 1. |

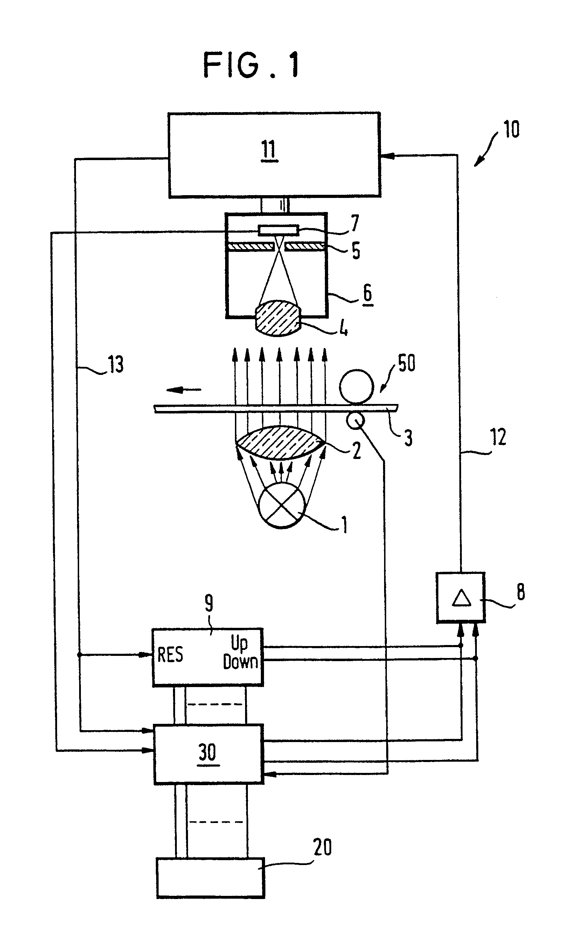

Bei der in Fig. 1 gezeigten bevorzugten Ausführungsform der erfindungsgemäßen Vorrichtung strahlt in an sich bekannter Weise eine Beleuchtungsquelle 1 mit vorgeschalteter Linse 2 auf die Rückseite einer durchlaufenden Warenbahn 3. Das hindurchfallende Licht fällt über eine Zylinderlinse 4 und eine Spaltblende 5 auf ein Fotoelement 7. Das Fotoelement 7 ist zusammen mit der Spaltblende 5 und der Zylinderlinse 4 in einem Gehäuse 6 gehalten, das auf der Welle eines Schrittmotores 11 befestigt ist und von diesem um die optische Achse des Systems verdreht werden kann.

Der Schrittmotor 11 wird über eine Steuerleitung 12 von einer Schrittmotorsteuerung mit Treiber 8 entsprechend den Steuersignalen aus einer Recheneinheit 30 angetrieben. Um eine definierte Null-Position zu erreichen, ist im Schrittmotor 11 ein entsprechender Geber für eine Winkelposition vorgesehen, der bei Erreichen dieser Position über einen Positionierausgang 13 ein entsprechendes Signal an die Recheneinheit 30 sendet und einen Zähler 9 auf Null zurücksetzt, dessen UP/DOWN-Eingänge mit denentsprechenden Vorwärts-Rückwärtssteuerleitungen aus der Recheneinheit 30 verbunden sind. Bei Inbetriebnahme der Vorrichtung fährt somit die Recheneinheit 30 über Ausgabe entsprechender Steuersignale an die Schrittmotorsteuerung 8 den Schrittmotor 11 bis zu seiner Null-Position, in der dann das entsprechende 80 Positioniersignal aus dem Positionierausgang 13 in die Recheneinheit 30 gelangt. Zu diesem Zeitpunkt wird auch der Zähler 9 zurückgesetzt. Von nun an wird jede Weiterschaltung des Schrittmotores 11 im Zähler 9 registriert, so daß die Zählwerte im Zähler 9 direkt einem bestimmten Winkel entsprechen.

Der Ausgang des Fotoelementes 7 ist ebenfalls in die Recheneinheit 30 geführt, welche die in den jeweiligen Winkelpositionen aufgenommenen Signalamplituden in digitale Werte wandelt und in einem Speicher 20 zur Weiterverarbeitung ablegt. Weiterhin ist bei der in Fig. 1 gezeigten bevorzugten Ausführungsform der Erfindung eine Abtastrollenanordnung 50 vorgesehen, welche über eine entsprechende Ausgangsleitung der Recheneinheit 30 Informationen über die Durchlaufgeschwindigkeit der Warenbahn 3 liefert. Selbstverständlich ist es auch möglich, die Fadenzahl pro Zeiteinheit aus dem Ausgangssignal des Detektors 7 herzuleiten.

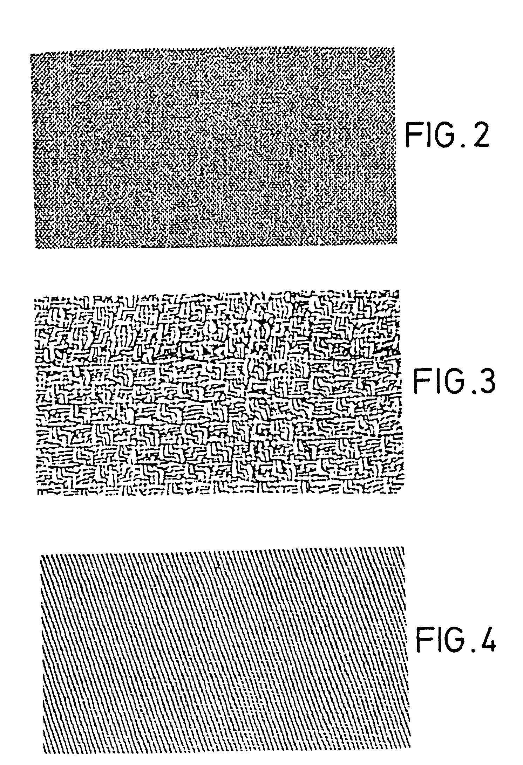

Im folgenden wird das erfindungsgemäße Verfahren, das mit der in Fig. 1 gezeigten bevorzugten Ausführungsform der erfindungsgemäßen Vorrichtung durchführbar ist, anhand der Fig. 2 bis 8 näher erläutert.

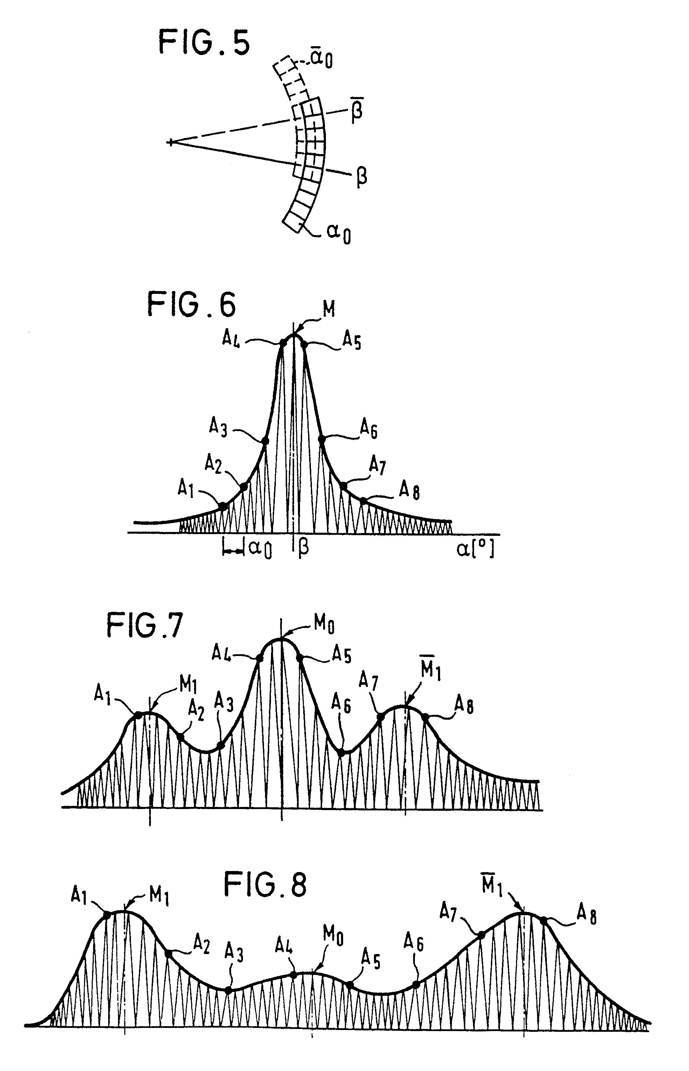

Wenn man sich die in den Fig. 2 bis 4 gezeigten Stoffmuster betrachtet, so wird klar, daß der in den Abbildungen horizontale Verlauf des Schußfadens je nach Gewebeart - und noch viel mehr bei Strickwaren - nicht unbedingt eindeutig durch die Lichtdurchlässigkeit eines linienförmigen Bereiches definierbar ist. Je nach Gewebeart sind vielmehr verschiedene Abhängigkeiten der Detektorsignale vom Winkel $\alpha$ der Spaltblende 5, die den linienförmigen Bereich definiert, zu erwarten. Der in Fig. 6 gezeigte Verlauf wäre bei Untersuchung des in Fig. 2 gezeigten Gewebes denkbar und weist nur ein einziges Maximum M auf. Bei anderen Gewebearten treten Nebenmaxima $M_1$ und $\overline{M}_1$ neben dem Hauptmaximum $M_0$ auf, während in Fig. 8 ein Signalverlauf (über den Winkel $\alpha$) gezeigt ist, bei dem das vom Schußfaden herrührende mittlere Maximum $M_0$ ein lokales Maximum mit einer geringeren maximalen Amplitude ist als die beden Nebenmaxima $M_1$ und $\overline{M}_1$.

In allen Fällen werden die Signalkurven nicht kontinuierlich aufgenommen, sondern lediglich in den Punkten $A_1$ bis $A_8$ Dies rührt daher, daß die Spaltanordnung mit Detektor etc. vom Schrittmotor 11 in definierten Schritten $\alpha_0$ (Fig. 5) um einen Mittelwinkel $\overline{\beta}$ hin- und herbewegt wird. In der Recheneinheit 30 wird dann zwischen den Werten $A_1$ bis $A_8$ interpoliert, falls nicht - bei "einfachen" Signalverhältnissen, wie in Fig. 6 - eine einfache Symmetriebetrachtung hinreichenden Aufschluß über die Lage des Schußfadens bzw. des (einzigen) Maximums M geben kann. Tritt ein Verzug des Schußfadens auf, so wird die Spaltanordnung mittels des Schrittmotores nachgefahren, in/dem ein neuer Mittelwinkel $\overline{\beta}$ (Fig. 5) gewählt wird, der Schrittmotor 11 also bei seiner in Fig. 5 nach oben gerichteten Bewegung einige Schritte weiterzählt, bis dieser neue Mittelwinkel $\overline{\beta}$ erreicht ist und die Meßpunkte $A_1$ bis $A_8$ wieder im wesentlichen symmetrisch zur Meßkurve bzw. zum Maximum M liegen. Die Meßpunkte in den Fig. 6 bis 8 haben eine geringere (Winkel-) Breite als die Schrittweite $\alpha_0$ des Schrittmotores 11, so daß kein "Verschleifen" der Informationen auftreten kann.

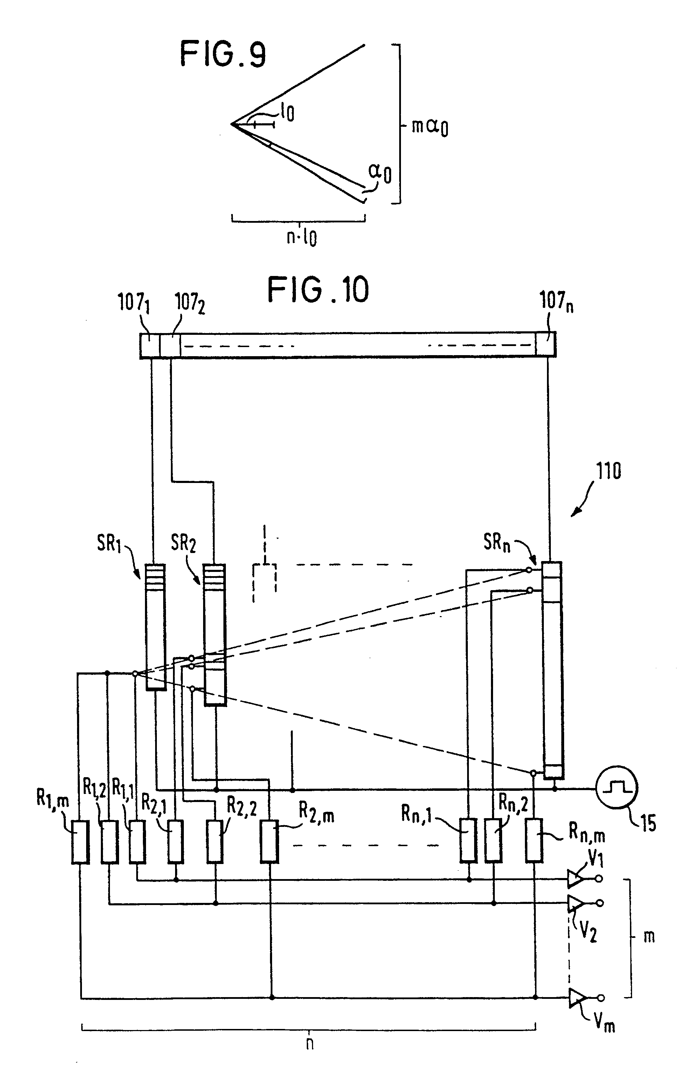

Das erfindungsgemäße Verfahren kann auch mit der im folgenden anhand der Fig. 9 und 10 erläuterten Vorrichtung durchgeführt werden. In diesem Fall ist die Spaltanordnung zur Betrachtung eines im wesentlichen linienförmigen Bereiches als Sensorzeile mit aneinandergereihten Einzelsensoren $107_1$ bis $107_n$ aufgebaut, die fest, also nicht hin- und herschwingend installiert ist. Derartige Sensoranordnungen sind als sogenannte CCD-Kameras erhältlich, wobei dort die Signalausgabe an sich seriell und nicht wie in Fig. 10 gezeigt, parallel erfolgt.

Die bei der in Fig. 1 gezeigten Anordnung durch einen Schrittmotor realisierte Verstellung des Winkels des linienförmigen Bereiches zur Ware erfolgt bei der in Fig. 10 gezeigten Anordnung durch eine zeitliche Verzögerung der Ausgangssignale der einzelnen Sensorelemente $107_1$ bis $107_n$. Die n Sensorelemente sind im wesentlichen äquidistant angeordnet und überstreichen eine Länge von $n \times 1_0$, wobei $1_0$ die durch eine gegebenenfalls vorgeschaltete Optik und die Sensordimensionen vorgegebene Elementenlänge ist.

Die aus den Einzelsensoren $107_1$ bis $107_n$ stammenden Signale gelangen in (Analog-) Schieberegister $SR_1$ bis $SR_n$, die jeweils - bei dem in Fig. 10 gezeigten Beispiel - von einem gemeinsamen Taktgenerator 15 angesteuert werden. Die Schieberegister $SR_1$ bis $SR_n$ sind an verschiedenen Stellen angezapft und zwar derart, daß sich für jedes der Sensorsignale eine andere Verzögerungszeit ergibt. Das Ausgangssignal des ersten Sensors $107_1$ wird um einen konstanten Betrag verzögert, während das Ausgangssignal des letzten Sensors $107_n$ entsprechend der gewünschten An-

zahl m von Winkelstellungen an insgesamt m Punkten angezapft ist. Die dazwischen liegenden Schieberegister $SR_2$ bis $SR_{(n-1)}$ sind an anderen Stellen derart angezapft (siehe strichlierte Linien in Fig. 10), daß sich (bei konstanter Warengeschwindigkeit) ein Abtastbild ergibt, wie es bereits im Zusammenhang mit der Vorrichtung nach Fig. 1 erläutert wurde. Die Verzögerungszeit in den Schieberegistern folgt also im wesentlichen der Funktion

$$\tau = n \times l_0 \times tg \ (m \times \frac{\alpha}{c})$$

hierbei wurde in erster Näherung davon ausgegangen, daß die Änderung der virtuellen Länge des Spaltes vernachlässigt werden kann. Selbstverständlich ist es möglich, durch entsprechend variierte Anzapfungen der einzelnen Sensorelemente $107_1$ bis $107_n$ diese virtuelle Längenänderung zu kompensieren.

Die zueinander gehörigen Ausgänge der Schieberegister $SR_1$ bis $SR_n$ werden über entsprechende Summierwiderstände $R_{1,1}$ bis $R_{n,m}$ und nachgeschaltete Summierverstärker $V_1$ bis $V_m$ aufsummiert, so daß an den Ausgängen dieser Summierverstärker jeweils die Summensignale für die Winkelstufen $m \times \alpha_0$ zur Weiterverarbeitung in der Recheneinheit 30 anstehen.

Selbstverständlich ist es auch möglich, anstelle einer Sensorelementenzeile einen einzigen Sensor zu verwenden und dafür die Lichtquelle entsprechend zu steuern und den linienförmigen Bereich abtasten zu lassen.

Weiterhin ist es möglich, Lichtquelle und Lichtempfänger hinsichtlich der Beweglichkeit umgekehrt anzuordnen, man kann also eine linienförmige Lichtquelle zu einem feststehenden Sensor verdrehen oder umgekehrt.

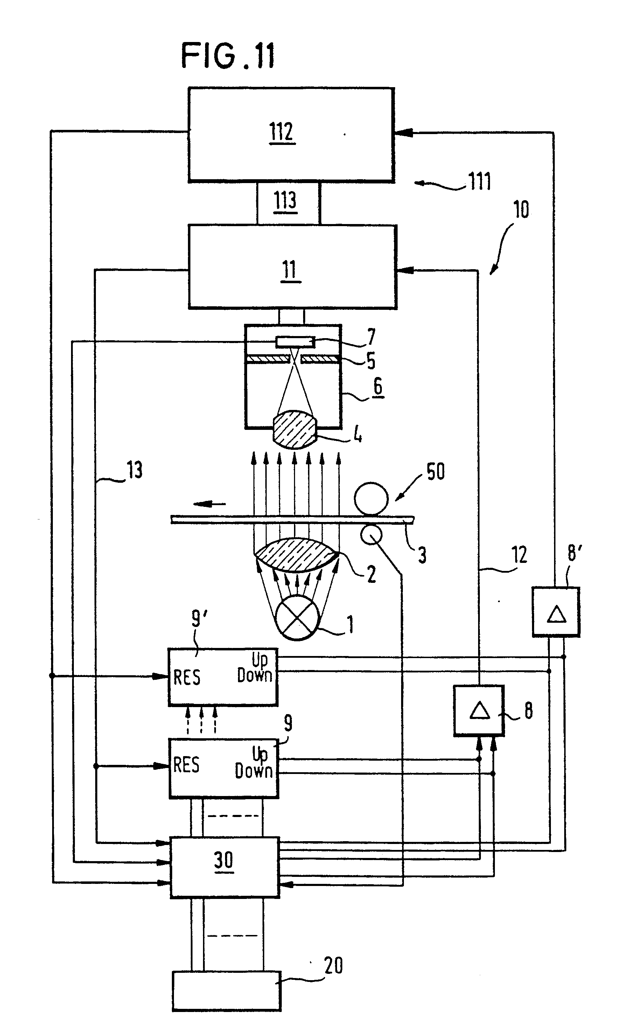

Bei einer weiteren bevorzugten Ausführungsform der erfindungsgemäßen Vorrichtung, die in Fig. 11 gezeigt ist, wird der Schrittmotor 11 auf der Ausgangswelle eines Untersetzungsgetriebes 113 montiert, das auf einen weiteren Schrittmotor 112 aufgesetzt ist. Der weitere Schrittmotor 112 wird derart angesteuert, daß der Mittelwinkel $\beta$ im wesentlichen auf den zwischen zwei Winkelstufen $\alpha_0$ des Schrittmotors 11 liegenden Winkel "nachgeführt" wird, so daß der Schrittmotor 11 symmetrisch um den Mittelwinkel $\beta$ oszillierend dreht. Dies gilt selbstverständlich im Zusammenhang mit der eingangs beschriebenen Maßnahme, den Mittelwinkel dem Verzugswinkel möglichst nahekommen zu lassen. Mit enem einzigen Schrittmotor gelingt dies nur relativ ungenau, während mit der in Fig. 11 gezeigten bevorzugten Ausführungsform der Erfindung ein wesentlich genaueres Nachführen möglich ist. Wenn bei dieser Ausführungsform der Erfindung die dem zweiten Schrittmotor 112 zugeleiteten Schrittimpulse in einem weiteren Zähler 9' in analoger Weise zu den Schritt-Pulsen für den Schrittmotor 11 gezählt werden, ist es möglich, den Verzugswinkel, der dem Mittelwinkel entspricht, direkt aus den Zählerständen abzuleiten. Darüberhinaus genügt es, wenn der Schrittmotor 11 um lediglich eine seiner Winkelstufen $\alpha_0$ verstellt werden kann.

## Ansprüche

1. Verfahren zur Messung der Schußfaden- oder Maschenreihenlage bei Textilien, bei dem man die Winkellage der Schußfäden/Maschenreihen zur Bestimmung des Verzugswinkels über einen Teilbetrag deren Länge hinweg über die Messung eines im wesentlichen linienförmigen Bereiches hinsichtlich seiner Lichttransmissions- oder Reflexionseigenschaften mißt und den linienförmigen Bereich um einen Mittelwinkel oszillierend hin und her dreht,
**dadurch gekennzeichnet,**
daß man die Drehbewegung des linienförmigen Bereiches bzw. die Messung der Reflexions-oder Transmissionswerte in mehreren diskreten Winkelstufen vornimmt und den Verzugswinkel durch einen Vergleich der für jede der Winkelstufen gewchteten Meßwerte bestimmt.

2. Verfahren nach Anspruch 1,
**dadurch gekennzeichnet,**
daß man die Messung für wenige Winkelstufen vornimmt aber die Winkelbreite des linienförmigen Bereiches relativ zum Abstand der Winkelstufen schmal wählt.

3. Verfahren nach einem der vorhergehenden Ansprüche,
**dadurch gekennzeichnet,**
daß man die zeitliche Abfolge der Winkelstufen in Abhängigkeit von der Warengeschwindigkeit und -Beschaffenheit (Fadenzahl) einstellt.

4. Verfahren nach einem der vorhergehenden Ansprüche,
**dadurch gekennzeichnet,**
daß man den Verzugswinkel anhand der (Winkel-) Lage von Maxima und/oder Minima der Meßwerte bestimmt.

5. Verfahren nach einem der vorhergehenden Ansprüche,
**dadurch gekennzeichnet,**

daß man den Verzugswinkel durch Bestimmung von Symmetrieeigenschaften der Meßwerte bezüglich eines Mittelwinkels bestimmt.

6. Verfahren nach einem der Ansprüche 4 oder 5,
**dadurch gekennzeichnet,**
daß man zur Bestimmung der Lage der Maxima und/oder Minima zwischen den Meßwerten unter Zugrundelegung einer bekannten mathematischen Funktion interpoliert.

7. Verfahren nach einem der vorhergehenden Ansprüche,
**dadurch gekennzeichnet,**
daß man die dem momentanen Verzugswinkel nächstlegende Stufe als Mittelwinkel bestimmt.

8. Verfahren nach einem der Ansprüche 5 oder 6,
**dadurch gekennzeichnet,**
daß man eine zwischen zwei Extremwerten (Maximum oder Minimum) liegende Stufe als Mittelwinkel bestimmt.

9. Vorrichtung zur Messung der Schußfaden- oder Maschenreihenlage be Textilien, mit einer Durchlicht- oder Auflichtmeßanordnung zur Messung des vcn der zu prüfenden Ware in einem im wesentlichen linienfcrmigen Bereich hindurchgelassenen bzw. reflektierten Lichtes einer Lichtquelle, wobei der linienförmige Bereich in seinem Winkel relativ zur Ware durch Verstellmittel verstellbar ist,
**dadurch gekennzeichnet,**
daß die Verstellmittel (10, 110) derart ausgebildet sind, daß der linienförmige Bereich in mehreren diskreten, äquidistanten Winkelstufen ($\alpha_0$) gekippt oder gedreht wird,

daß eine Gruppe von Speichern ($20_1$ bis $20_8$) zum Speichern der Meßwerte entsprechend mindestens einiger Winkelstufen vorgesehen ist, und

daß eine Recheneinheit (30) vorgesehen, mit der Gruppe von Speichern ($20_1$ bis $20_8$) verbunden und derart ausgebildet ist, daß die Speicherinhalte miteinander in Beziehung gesetzt (verglichen) werden und aus dem Vergleichsergebnis der Verzugswinkel errechnet wird.

10. Vorrichtung nach Anspruch 9,
**dadurch gekennzeichnet,**
daß die (Winkel-) Breite des linienförmigen Bereiches geringer ist als eine Winkelstufe ($\alpha_0$)

11. Vorrichtung nach einem der Ansprüche 9 oder 10,
**dadurch gekennzeichnet,**
daß Mittel (50) zum Abtasten der Warengeschwindigkeit bzw. der (Schuß-) Fadenzahl pro Zeiteinheit vorgesehen sind, die mit den Verstellmitteln (10, 110) in steuernder Verbindung derart stehen, daß die Verstellgeschwindigkeit (Anzahl der Winkelstufen $\alpha_0$ pro Zeiteinheit) der Anzahl der Schußfäden pro Zeiteinheit bzw. der Warengeschwindigkeit proportional ist.

12. Vorrichtung nach einem der Ansprüche 9 bis 11,
**dadurch gekennzeichnet,**
daß die Verstellmittel (10, 110) mit der Recheneinheit (30) derart verschaltet sind, daß der linienförmige Bereich im wesentlichen symmetrisch um einen Mittelwinkel ($\beta$) periodisch oszillierend verstellt wird.

13. Vorrichtung nach einem der Ansprüche 9 bis 12,
**dadurch gekennzeichnet,**
daß die Verstellmittel (10) mindesten einen Schrittmotor (11) umfassen.

14. Vorrichtung nach Anspruch 13,
**dadurch gekennzeichnet,**
daß der Schrittmotor (11) auf Antriebsmitteln (111) befestigt ist, die derart ausgebildet sind, daß der Schrittmotor (11) bzw. dessen Ständer um seine Drehachse in äquidistanten Fein-Winkelstufen ($\alpha'_0$) drehbar ist, wobei die Fein-Winkelstufen ($\alpha'_0$) dem Betrag nach wesentlich kleiner snd als die Winkelstufen ($\alpha_0$)

15. Vorrichtung nach Anspruch 14,
**dadurch gekennzeichnet,**
daß die Antriebsmittel (111) einen weiteren Schrittmotor (112) mit nachgeschaltetem Untersetzungsgetriebe (113) umfassen, auf dessen Ausgangswelle der Schrittmotor (11) koaxial montiert ist.

**Claims**

1. A method of measuring the weft thread or course position in textiles, in which the angular position of the weft threads/courses is measured for determining the drawing angle along part of its length by measuring a substantially linear area in respect of its light transmission or reflection characteristics and oscillatingly turning said linear area to and fro about a central angle,
**characterized in**
that the turning movement of said linear area or the measurement of the reflection or transmission values is carried out in a plurality of discrete angular stages and said drawing angle is determined by a comparison of the measured values weighted for each of said angular stages.

2. A method as claimed in claim 1,
   **characterized in**
   that the measurement is carried out for a few angular stages but the angular width of said linear area relative to the interval between said angular stages is selected to be narrow.

3. A method as claimed in any one of the preceding claims,
   **characterized in**
   that the time sequence of said angular stages is set in dependency on the fabric speed and nature (number of threads).

4. A method as claimed in any one of the preceding claims,
   **characterized in**
   that said drawing angle is determined by means of the (angular) position of maxima and/or minima of the measured values.

5. A method as claimed in any one of the preceding claims,
   **characterized in**
   that said drawing angle is determined by determining symmetry characteristics of the measured values with respect to a central angle.

6. A method as claimed in any one of claims 4 or 5,
   **characterized in**
   that interpolation on the basis of a known mathematical function is carried out for determining the position of the maxima and/or minima between the measured values.

7. A method as claimed in any one of the preceding claims,
   **characterized in**
   that the stage which is nearest to the instantaneous drawing angle is determined as said central angle.

8. A method as claimed in any one of claims 5 or 6,
   **characterized in**
   that a stage between two extreme values (maximum or minimum) is determined as said central angle.

9. An apparatus for measuring the weft thread or course position in textiles, comprising a transmitting-light or incident-light measuring assembly for measuring the light of a light source transmitted by or reflected from the tested fabric in a substantially linear area, the angle of said linear area being adjustable relative to said fabric by adjusting means,
   **characterized in**
   that said adjusting means (10, 110) is designed in such a way that said linear area is tilted or turned in a plurality of discrete, equidistant angular stages ($\alpha_0$),
   that a group of memories ($20_1$ to $20_8$) is provided for storing the measured values according to at least some of said angular stages, and
   that an arithmetic unit (30) is provided and connected to said group of memories ($20_1$ to $20_8$) and designed in such a way that the memory contents are brought into relation with each other (compared) and the drawing angle is calculated from the result of said comparison.

10. An apparatus as claimed in claim 9,
    **characterized in**
    that the (angular) width of said linear area is less than one angular stage ($\alpha_0$).

11. An apparatus as claimed in any one of claims 9 or 10,
    **characterized in**
    that means (50) are provided for scanning the fabric speed or the number of (weft) threads per unit of time, said means (50) being controllingly connected to said adjusting means (10, 110) in such a way that the adjusting speed (number of angular stages $\alpha_0$ per unit of time) is proportional to the number of weft threads per unit of time or the fabric speed, respectively.

12. An apparatus as claimed in any one of claims 9 to 11,
    **characterized in**
    that said adjusting means (10, 110) is interconnected to said arithmetic unit (30) in such a way that said linear area is adjusted substantially symmetrically about a central angle ($\beta$) in a periodically oscillating fashion.

13. An apparatus as claimed in any one of claims 9 to 12,
    **characterized in**
    that said adjusting means (10) comprises at least one stepping motor (11).

14. An apparatus as claimed in claim 13,
    **characterized in**
    that said stepping motor (11) is mounted on drive means (111) designed in such a way that said stepping motor (11) or its mount is rotatable about its rotary axis in equidistant fine angular stages ($\alpha'_0$), said fine angular stages ($\alpha'_0$) being substantially smaller than said angular stages ($\alpha_0$) in terms of the amount thereof.

15. An apparatus as claimed in claim 14,
**characterized in**
that said drive means (111) comprises a further stepping motor (112) having a succeeding reduction gear (113) on the output shaft of which said stepping motor (11) is mounted coaxially.

**Revendications**

1. Procédé pour mesurer la position de fils de trame ou de rangées de mailles dans des produits textiles, ou tissus, dans lequel on mesure la position angulaire des fils de trame/rangées de mailles pour déterminer l'angle de distorsion jusqu'au-delà d'une partie de leur longueur, en mesurant une région sensiblement rectiligne en ce qui concerne ses propriétés de transmission ou de réflexion de lumière, et fait tourner la région rectiligne d'un mouvement de va-et-vient oscillant autour d'un angle moyen, caractérisé en ce que l'on effectue le mouvement de rotation de la région rectiligne et/ou la mesure des valeurs de réflexion ou de transmission en plusieurs intervalles angulaires distincts et détermine l'angle de distorsion par une comparaison des valeurs de mesure pondérées pour chacun des intervalles angulaires.

2. Procédé selon la revendication 1, caractérisé en ce que l'on effectue la mesure pour un petit nombre d'intervalles angulaires mais choisit la largeur angulaire de la région rectiligne étroite par rapport à l'espacement des intervalles angulaires.

3. Procédé selon la revendication 1 ou 2, caractérisé en ce que l'on règle la succession dans le temps des intervalles angulaires en fonction de la vitesse et de la nature (nombre de fils) du produit.

4. Procédé selon l'une quelconque des revendications précédentes, caractérisé en ce que l'on détermine l'angle de distorsion en se référant à la position (angulaire) de maximums et/ou de minimums des valeurs de mesure.

5. Procédé selon l'une quelconque des revendications précédentes, caractérisé en ce que l'on détermine l'angle de distorsion par détermination de propriétés de symétrie des valeurs de mesure par rapport à un angle moyen.

6. Procédé selon la revendication 4 ou 5, caractérisé en ce que pour la détermination de la position des maximums et/ou minimums on interpole entre les valeurs de mesure en se fondant sur une fonction mathématique connue.

7. Procédé selon l'une quelconque des revendications précédentes, caractérisé en ce que l'on désigne comme angle moyen l'intervalle le plus proche de l'angle de distorsion momentané.

8. Procédé selon la revendication 5 ou 6, caractérisé en ce que l'on désigne comme angle moyen un intervalle situé entre deux valeurs extrêmes (maximum ou minimum).

9. Dispositif pour mesurer la position de fils de trame ou de rangées de mailles dans des produits textiles, ou tissus, équipé d'un appareil de mesure à éclairage par transmission ou par réflexion destiné à mesurer la lumière d'une source lumineuse qui est transmise ou réfléchie par le produit à contrôler dans une région sensiblement rectiligne, la région rectiligne étant réglable, dans son angle par rapport au produit, par des organes de déplacement, caractérisé
en ce que les organes de déplacement (10, 110) sont réalisés de telle manière que la région rectiligne est basculée ou tournée de plusieurs intervalles angulaires distincts et équidistants ($\alpha_0$),
en ce qu'il est prévu un groupe de mémoires ($20_1$ à $20_8$) pour la mise en mémoire des valeurs de mesure correspondant à au moins quelques intervalles angulaires, et
en ce qu'une unité de calcul (30) est prévue, connectée au groupe de mémoires ($20_1$ à $20_8$) et réalisée de telle manière que les contenus des mémoires soient mis en relation (comparés) les uns avec les autres et que l'angle de distorsion soit calculé à partir du résultat de la comparaison.

10. Dispositif selon la revendication 9, caractérisé en ce que la largeur (angulaire) de la région rectiligne est inférieure à un intervalle angulaire ($\alpha_0$).

11. Dispositif selon la revendication 9 ou 10, caractérisé en ce qu'il est prévu des moyens (50) pour explorer la vitesse du produit, c'est-à-dire le nombre de fils (de trame) par unité de temps, qui se trouvent en relation de commande avec les organes de déplacement (10, 110) de telle manière que la vitesse de déplacement (nombre d'intervalles angulaires $\alpha_0$ par unité de temps) soit proportionnel au nombre des fils de trame par unité de temps, c'est-à-dire à la vitesse du produit.

12. Dispositif selon l'une quelconque des revendications 9 à 11, caractérisé en ce que les organes de déplacement (10, 110) sont connectés à l'unité de calcul (30) de telle manière que la région rectiligne soit déplacée, en oscillant périodiquement, sensiblement symétriquement autour d'un angle moyen ($\beta$).

13. Dispositif selon l'une quelconque des revendications 9 à 12, caractérisé en ce que les organes de déplacement (10) comprennent au moins un moteur pas-à-pas (11).

14. Dispositif selon la revendication 13, caractérisé en ce que le moteur pas-à-pas (11) est fixé sur des organes d'entraînement (111) qui sont réalisés de telle manière que le moteur pas-à-pas (11) ou son support puisse tourner autour de son axe de rotation par intervalles angulaires précis et équidistants ($\alpha'_0$), les intervalles angulaires précis ($\alpha'_0$) étant quantitativement bien plus petits que les intervalles angulaires ($\alpha_0$).

15. Dispositif selon la revendication 14, caractérisé en ce que les organes d'entraînement (111) comprennent un autre moteur pas-à-pas (112) avec un engrenage démultiplicateur (113) monté en aval et sur l'arbre de sortie duquel le moteur pas-à-pas (11) est monté coaxialement.

# FIG . 1

FIG.2

FIG.3

FIG.4

FIG.5

FIG.6

FIG.7

FIG.8

# FIG.9

# FIG.10

# FIG.11